# EUROPEAN PATENT SPECIFICATION

(11) **EP 3 594 307 B1**
(45) Date of publication and mention of the grant of the patent: **31.12.2025**
(21) Application number: 18775222.5
(22) Date of filing: 27.03.2018
(51) Int. Cl.: C09K 3/10, C08K 3/04, C08L 27/12, C08L 101/00, F16J 15/16

(54) **SEALING MEMBER**
DICHTUNGSELEMENT
ÉLÉMENT D'ÉTANCHÉITÉ

(30) Priority: 31.03.2017 JP 2017071928
(43) Date of publication of application: 15.01.2020
(73) Proprietor: Kabushiki Kaisha Riken, Tokyo 102-8202 (JP)
(72) Inventor: OWADA, Akihiro, Kashiwazaki-shi Niigata 945-8555 (JP); SHINADA, Takashi, Kashiwazaki-shi Niigata 945-8555 (JP); OKAMOTO, Takuya, Kashiwazaki-shi Niigata 945-8555 (JP); IRIE, Shiori, Tokyo 136-0071 (JP); GUNJI, Yasuhiro, Tokyo 136-0071 (JP); YAMAMOTO, Noriaki, Tokyo 136-0071 (JP); YANAGAWA, Hajime, Tokyo 136-0071 (JP)
(74) Representative: Markfort, Iris-Anne Lucie
(86) International application number: PCT/JP2018/012482
(87) International publication number: WO 2018/181346

(56) References cited:
- EP-A1- 0 630 940
- WO-A1-2015/141442
- JP-A- 2003 155 382
- JP-A- 2017 057 915
- JP-A- H11 293 075
- US-A- 4 948 852
- US-B2- 6 939 651

## Description

### Technical Field

The present invention relates to a sealing member having slidability.

### Background Art

Rubber is suitable as a sealing member because it is capable of ensuring a sealing property by its own rubber elasticity (repulsive force). Meanwhile, rubber has a high coefficient of friction due to its viscoelastic properties, and therefore has no slidability. For this reason, in order to seal between sliding members accompanied by relative sliding by using rubber, it is necessary to improve the slidability of the rubber.

In general, a lubricant such as a resin is used to improve the slidability of rubber. For example, the slidability of rubber can be improved by coating the surface of the rubber with the lubricant (see, for example, Japanese Patent Application Laid-open No. 1995-227935). Further, there is also a technology for improving the slidability of rubber by dispersing a lubricant in the rubber.
Reference is also made to JP 2003 155382 A disclosing a cross-linked rubber composition that comprises a rubber cross- linked with a peroxide and an acrylic modified polyorganosiloxane. The rubber is preferably any one or more kinds of ethylene-propylene rubber (EPR) and ethylene-propylene-diene rubber (EPDM). A sealing material comprises the cross-liked rubber composition and is represented by an O-ring or a packing. The sealing material is suitable for sliding parts of water supply, food producing equipment or medical and sanitary machinery and appliances. A method for producing the cross-linked rubber composition comprises cross-linking a cross- linkable rubber composition containing an uncross-linked rubber, a peroxide cross-linking agent and an acrylic-modified polyorganosiloxane.

### Disclosure of Invention

### Technical Problem

Fluorine rubber is excellent in heat resistance, oil resistance, and chemical resistance, and has a performance that is different from that of another synthetic rubber such as nitrile rubber. For this reason, a sealing member formed of fluorine rubber can be used for various purposes. Then, it is desired to use fluorine rubber for also a sealing member for sealing between sliding members.

However, the fluorine rubber has very high lubricity with respect to a general lubricant unlike other synthetic rubbers. For this reason, it is difficult to directly apply, to the fluorine rubber, the above-mentioned technology for improving the slidability of rubber by using the lubricant.

That is, even if the surface of the fluorine rubber is coated with a lubricant, the lubricant is not well retained on the surface of the fluorine rubber, and thus is easily peeled from the surface of the fluorine rubber. Further, it is difficult to disperse, in the fluorine rubber, a lubricant having a sufficient amount to improve the slidability of the fluorine rubber.

In view of the circumstances as described above, it is an object of the present invention to provide a ring-shaped sealing member having both the sealing property and slidability.

### Solution to Problem

In order to achieve the above-mentioned object, a sealing member according to claim 1 is provided.

The sealing member includes: 100 parts by weight of fluorine rubber; and 0.5 to 50 (inclusive) parts by weight of a particulate resin.

The particulate resin includes a compatible portion and a lubrication portion, the compatible portion having compatibility with the fluorine rubber, the lubrication portion having lubricity with respect to the fluorine rubber.

A Shore A hardness measured using the sliding surface as a pressing surface is not less than 80.

The particulate resin according to the invention is present on the sliding surface.

In this sealing member, since rubber elasticity is achieved by the fluorine rubber, a favorable sealing property can be realized.

Further, it is possible to impart high slidability to the sealing member by the action of the lubrication portion of the particulate resin. Further, this sealing member has high durability because the particulate resin is hard to be removed from the surface of the sealing member by the action of the compatible portion of the particulate resin.

Therefore, this sealing member has both the sealing property and slidability.

The particulate resin according to the invention is dispersed in the fluorine rubber.
With this configuration, by the action of the particulate resin dispersed in the fluorine rubber, the slidability of the sealing member is ensured even in the case where the sliding surface is worn.

The particulate resin may contain not less than 40 weight% of silicone.
With this configuration, the slidability of the sealing member is further improved.

The particulate resin may be formed by a silicone-acrylic copolymer.
With this configuration, the high slidability of the sealing member is maintained for a long time.

The seal member may further include carbon distributed in the fluorine rubber.
With this configuration, a sealing member having appropriate hardness can be obtained.

A surface roughness Rz of a counterpart material on which the sliding surface slides may be not less than 0.5 z and not more than 18.0 z in accordance with JIS B 6001-1982.

The surface roughness Rz of the sliding surface may be not less than 0.5 z and not more than 10.0 z in accordance with JIS B 6001-1982.

The sliding surface may include no parting line. In the sealing member having such a configuration, a more favorable sealing property and slidability can be achieved.

### Advantageous Effects of Invention

As described above, in accordance with the present invention, it is possible to provide a ring-shaped sealing member having both the sealing property and slidability.

### Brief Description of Drawings

[Fig. 1] Fig. 1 is a schematic diagram showing a cross section of a composition for a sealing member according to an embodiment of the present invention.
[Fig. 2] Fig. 2 is a schematic diagram showing a cross section of a particulate resin of the composition for a sealing member.
[Fig. 3A] Fig. 3A is a schematic diagram showing a cross section of the composition for a sealing member during molding.
[Fig. 3B] Fig. 3B is a schematic diagram showing a cross section of the composition for a sealing member during molding.
[Fig. 3C] Fig. 3C is a schematic diagram showing a partial cross section of a sealing member obtained by molding the composition for a sealing member.
[Fig. 4] Fig. 4 is a graph showing an example of a result of a slidability test of the sealing member.
[Fig. 5A] Fig. 5A is a plan view of the sealing member formed in a ring shape.
[Fig. 5B] Fig. 5B is a cross-sectional view of the sealing member taken along the line A-A' in Fig. 5A.
[Fig. 6] Fig. 6 is a cross-sectional view showing an operation of incorporating the sealing member into a shaft and a housing.
[Fig. 7] Fig. 7 is a cross-sectional view showing the state where the sealing member is incorporated into the shaft and the housing.
[Fig. 8] Fig. 8 is a graph showing an example of an infrared spectrum obtained as a result of infrared absorption analysis of the sealing member.
[Fig. 9] Fig. 9 is a graph showing an example of a result of a slidability test of the sealing member. Mode(s) for Carrying Out the Invention

Hereinafter, an embodiment of the present invention will be described with reference to the drawings.

### 1. Schematic Configuration

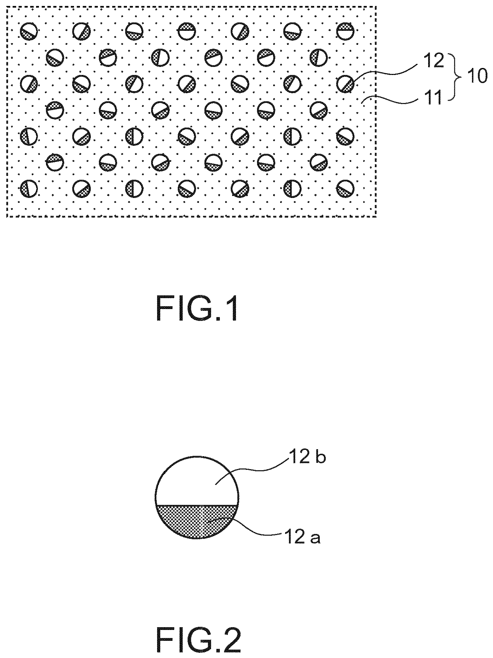

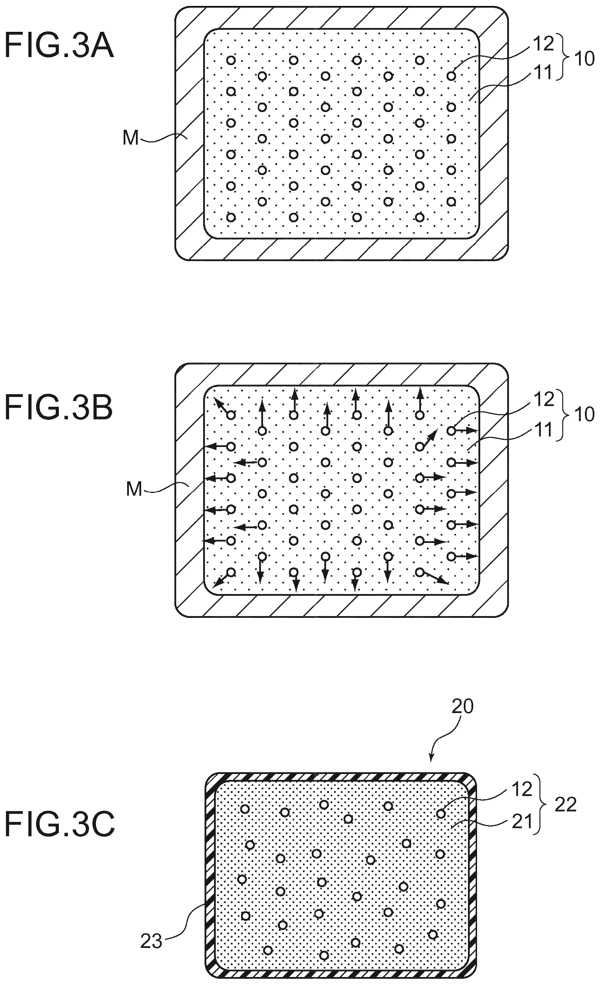

Fig. 1 is a schematic diagram showing a partial cross section of a composition 10 for a sealing member according to this embodiment. The composition for a sealing member 10 is configured as a raw material for producing a sealing member 20 (see Fig. 3C and Figs. 5A to 7). That is, the sealing member 20 is obtained by molding the composition for a sealing member 10.

The composition for a sealing member 10 includes an uncrosslinked fluorine rubber component 11 and a particulate resin 12. The particulate resin 12 is particulate (powdered), and uniformly dispersed in the fluorine rubber component 11. The particulate resin 12 is configured as a lubrication component of the composition for a sealing member 10.

Fig. 2 is a schematic diagram showing an enlarged cross section of the particulate resin 12. Note that although the particulate resin 12 is shown in a spherical shape in Figs 1 and 2, the shape of the particulate resin 12 can be arbitrarily changed. Further, although all the particulate resins 12 have similar shapes in Figs. 1 and 2, the shape of each of the particulate resins 12 may differ.

The particulate resin 12 includes a compatible portion 12a having compatibility with fluorine rubber, and a lubrication portion 12b having lubricity with respect to the fluorine rubber. Note that although the compatible portion 12a and the lubrication portion 12b are shown separated in one direction in Fig. 2, the particulate resin 12 is not limited to such a configuration.

For example, the compatible portion 12a and the lubrication portion 12b may be distributed throughout the particulate resin 12. Further, the particulate resin 12 may have a configuration in which the compatible portion 12a is dispersed in the lubrication portion 12b or, conversely, a configuration in which the lubrication portion 12b is dispersed in the compatible portion 12a.

Here, assumption is made that a particulate resin includes only the lubrication portion 12b, i.e., the particulate resin does not include the compatible portion 12a. This particulate resin does not having compatibility with the fluorine rubber component 11, i.e., has only lubricity with respect to the fluorine rubber component 11, and therefore tends to be separated from the fluorine rubber component 11.

Therefore, even if such a particulate resin is tried to be dispersed in the fluorine rubber component 11, the particulate resin cannot remain in the fluorine rubber component 11 and is ejected out of the fluorine rubber component 11. For this reason, it is difficult to disperse such a particulate resin in the fluorine rubber component 11.

In this regard, the particulate resin 12 according to this embodiment includes the compatible portion 12a in addition to the lubrication portion 12b. Therefore, the particulate resin 12 is capable of remaining in the fluorine rubber component 11 due to the action of the compatible portion 12a. For this reason, it is possible to uniformly disperse the particulate resin 12 in the fluorine rubber component 11.

Note that in the process of producing the composition for a sealing member 10, it is favorable to knead a small amount of the fluorine rubber component 11 with respect to the particulate resin 12 before dispersing the particulate resin 12 in the fluorine rubber component 11. As a result, the dispersibility of the particulate resin 12 with respect to the fluorine rubber component 11 is further improved.

Figs. 3A to 3C are each a cross-sectional view schematically showing a method of producing the sealing member 20 using the composition for a sealing member 10. The composition for a sealing member 10 is molded as the sealing member 20 by an arbitrary method. Examples of the method of molding the composition for a sealing member 10 include an injection molding method, an extrusion molding method, and a press molding method.

Fig. 3A shows the state where a mold M is filled with the composition for a sealing member 10. The particulate resin 12 is uniformly dispersed in the fluorine rubber component 11 in the mold M. The shape of the mold M is determined in accordance with the shape of the sealing member 20, and the sealing member 20 having an arbitrary shape can be produced from the composition for a sealing member 10.

Fig. 3B shows the state where the composition for a sealing member 10 deposited in the mold M is heated. By heating the composition for a sealing member 10, crosslinking (primary vulcanization) of the fluorine rubber component 11 proceeds. Along with this, the particulate resin 12 dispersed in the fluorine rubber component 11 moves toward the surface due to the action of the lubrication portion 12b.

As a result, at least a part of the particulate resin 12 bleed out on the surface of the fluorine rubber component 11. The particulate resins 12 that have bleed out on the surface of the fluorine rubber component 11 are bonded to each other and integrated to form a surface layer portion 23 (see Fig. 3C) covering the fluorine rubber component 11.

When crosslinking of the fluorine rubber component 11 further progresses, the particulate resin 12 does not move. After the crosslinking of the fluorine rubber component 11 is finished, a molded body is taken out from the mold M. By performing secondary vulcanization on this molded body as necessary, the sealing member 20 is obtained.

Fig. 3C shows the sealing member 20 produced by molding the composition for a sealing member 10. The sealing member 20 includes a body portion 22 and the surface layer portion 23. The body portion 22 constitutes the shape of the sealing member 20. The surface layer portion 23 covers the surface of the body portion 22.

The body portion 22 is formed mainly of a fluorine rubber 21 produced by crosslinking the fluorine rubber component 11 contained in the composition for a sealing member 10. Further, in the body portion 22, the particulate resin 12 that has remained without bleeding on the surface of the fluorine rubber component 11 at the time of crosslinking is dispersed in the fluorine rubber 21.

The fluorine rubber 21 is excellent in heat resistance, oil resistance, and chemical resistance. For this reason, the sealing member 20 in which the body portion 22 is mainly formed of the fluorine rubber 21 is excellent in heat resistance, oil resistance, and chemical resistance. Therefore, the sealing member 20 achieves high durability in various applications.

Since the surface layer portion 23 is obtained by bonding the particulate resin 12, it includes the compatible portion 12a having compatibility with the fluorine rubber 21 and the lubrication portion 12b having lubricity with respect to the fluorine rubber 21. The surface layer portion 23 typically has a configuration in which the compatible portion 12a and the lubrication portion 12b are distributed throughout the surface layer portion 23.

The surface layer portion 23 formed on the surface of the sealing member 20 has high slidability due to the action of the lubrication portion 12b that is a self-lubricating component. Therefore, the sealing member 20 can achieve high slidability that cannot be achieved by only the fluorine rubber 21 because the surface layer portion 23 functions as a solid lubricating film.

Further, the surface layer portion 23 can achieve a high adhesion force of the surface layer portion 23 to the body portion 22 (fluorine rubber 21) by the action of the compatible portion 12a. As a result, the surface layer portion 23 has high durability because it becomes hard to peel from the body portion 22. Therefore, the sealing member 20 maintains high slidability for a long time.

Further, in the sealing member 20, the particulate resin 12 is caused to bleed out at the time of molding to form the surface layer portion 23. Thus, even in a complicated shape, it is possible to easily form the surface layer portion 23 in the entire area of the surface of the body portion 22 without a gap. As a result, the sealing member 20 achieves high slidability more reliably.

In addition, in the sealing member 20, since the particulate resin 12 is dispersed in the body portion 22, the particulate resin 12 is present on the surface of the body portion 22. Therefore, even in the case where the surface layer portion 23 is worn and the body portion 22 is exposed, the sealing member 20 is capable of ensuring slidability.

Note that in the sealing member 20, in the case where it is sufficient that high slidability by the surface layer portion 23 is obtained, the particulate resin 12 does not need to be dispersed in the body portion 22. That is, all the particulate resins 12 contained in the composition for a sealing member 10 may form the surface layer portion 23 of the sealing member 20.

Further, in the sealing member 20, the particulate resin 12 only needs to be present on the surface thereof, and the particulate resin 12 does not necessarily need to form the film-shaped surface layer portion 23. That is, the sealing member 20 does not necessarily need to have a configuration in which the body portion 22 and the surface layer portion 23 can be clearly distinguished from each other.

Further, in the sealing member 20, the particulate resin 12 only needs to be present on the surface thereof, and it does necessarily need to cause the particulate resin 12 to bleed out at the time of molding. In this case, in the sealing member 20, the concentration of the particulate resin 12 may be approximately the same between the surface and the inside, or the concentration of the particulate resin 12 may be higher inside than on the surface.

### 2. Detailed Configuration

### 2.1 Sealing Member 20

### 2.1.1 Surface Layer Portion 23 and Particulate Resin 12

The resin forming the surface layer portion 23 and the particulate resin 12 of the sealing member 20 only needs to be a resin including the compatible portion 12a having compatibility with the fluorine rubber 21, and the lubrication portion 12b having lubricity with respect to the fluorine rubber 21. The configuration of the compatible portion 12a and the lubrication portion 12b in such a resin is not limited to a specific one.

As an example, a silicone resin, which has favorable slidability and a main skeleton of silicone having low surface energy, can be used as the resin forming the surface layer portion 23 and the particulate resin 12. In the silicone resin, the main skeleton of silicone becomes a self-lubricating component, and functions as the lubrication portion 12b.

The silicone forming the silicone resin is not limited to a specific type one. Specific examples thereof include dimethyl silicone, methylphenyl silicone, amino-modified silicone, and epoxy-modified silicone.

Further, in the silicone resin, the configuration that functions as the compatible portion 12a may be bonded to the main skeleton of silicone. The configuration that functions as the compatible portion 12a only needs to have compatibility with the fluorine rubber 21, and can be realized by using, for example, various functional groups or various resins (e.g., acrylic resin).

The silicone resin favorably contains 40 weight% or more of silicone in order to achieve sufficient lubricity. As a result, sufficiently high slidability can be achieved in the surface layer portion 23. Further, a sufficient amount of the particulate resin 12 bleeds out at the time of molding of the sealing member 20, and thus, the surface layer portion 23 is favorably formed.

The silicone resin imparted with compatibility with the fluorine rubber 21 can be selected from commercially available products depending on the application of the sealing member 20, or the like. For example, such a silicone resin can be selected from Chaline (registered trademark) series, which is a silicone-acrylic copolymer manufactured by Nissin Chemical Industry Co., Ltd.

### 2.1.2 Fluorine Rubber 21

The fluorine rubber 21 constituting the body portion 22 of the sealing member 20 is not limited to a specific one as long as it is rubber containing a fluorine atom. As the fluorine rubber 21, for example, vinylidene fluoride fluororubber (FKM) mainly formed of vinylidene fluoride can be used.

More specifically, as the binary fluorine rubber 21, for example, vinylidene fluoride-hexafluoropropylene-, vinylidene fluoride-chlorotrifluoroethylene-, tetrafluoroethylene-perfluoro-, or tetrafluoroethylene-propylene-based one can be used.

As the ternary fluorine rubber 21, for example, vinylidene fluoride-hexafluoropropylene-tetrafluoroethylene-, vinylidene fluoride-perfluoroalkyl vinyl ether-tetrafluoroethylene-, or tetrafluoroethylene-propylene-vinylidene fluoride-based one can be used. These ternary fluorine rubbers 21 are generally excellent in cold resistance.

Further, as the fluorine rubber 21, a single type one may be used or a plurality of types may be combined for use. The degree of polymerization of the fluorine rubber 21 can be determined in accordance with the application of the sealing member 20 or the like so that an appropriate sealing property or slidability can be achieved.

### 2.1.3 Additive

The body portion 22 of the sealing member 20 may contain an additive other than the fluorine rubber 21 and the particulate resin 12 as necessary. For example, the body portion 22 may contain a curing agent for increasing the hardness as an example. As the curing agent, for example, powdery carbon (carbon black or the like) can be used.

Further, the body portion 22 may contain various additives such as a filler, a reinforcing material, and a pigment other than the curing agent.

### 2.2 Composition for Sealing Member 10

2.2.1 Fluorine Rubber Component 11 and Particulate Resin 12

The configuration of the fluorine rubber component 11, and the particulate resin 12 in the composition for a sealing member 10 is determined in accordance with the configuration of the sealing member 20. The content of the particulate resin 12 in the composition for a sealing member 10 is not less than 0.5 parts by weight and not more than 50 parts by weight on the basis of 100 parts by weight of the fluorine rubber component 11.

By setting the content of the particulate resin 12 to not less than 0.5 parts by weight, a sufficient amount of the particulate resin 12 bleeds out at the time of molding, and thus, the favorable surface layer portion 23 is formed. Further, by keeping the content of the particulate resin 12 at not more than 50 parts by weight, a favorable sealing property can be easily achieved by the action of the fluorine rubber 21 in the sealing member 20.

Further, from the same viewpoint, the content of the particulate resin 12 in the composition for a sealing member 10 is favorably not less than 1 part by weight and not more than 20 parts by weight on the basis of 100 parts by weight of the fluorine rubber component 11. As a result, the sealing member 20 having both more favorable slidability and a more favorable sealing property can be achieved.

### 2.2.2 Additive

Also the additive in the composition for a sealing member 10 is determined in accordance with the configuration of the sealing member 20. That is, the composition for a sealing member 10 may contain the curing agent described above. Further, the composition for a sealing member 10 may contain various additives such as a filler, a reinforcing material, and a pigment other than the curing agent.

Further, the composition for a sealing member 10 may contain a crosslinking agent for crosslinking the fluorine rubber component 11 in advance. The crosslinking agent is not limited to a specific one. For example, the crosslinking agent can be selected from commercially available crosslinking agents. As the crosslinking agent, for example, a polyamine crosslinking-, polyol crosslinking-, or peroxide crosslinking-based one can be used.

Further, the composition for a sealing member 10 may contain a processing aid. Examples of the processing aid include a fatty acid such as stearic acid and fatty acid metal salt. However, the processing aid hinders the movement of the particulate resin 12 during crosslinking of the fluorine rubber component 11, i.e., hinders formation of the surface layer portion 23 in some cases.

From such a viewpoint, the amount of the processing aid is favorably small. Specifically, it is favorable to keep the amount of the processing aid at not more than 3 parts by weight on the basis of 100 parts by weight of the fluorine rubber component 11. Further, it is more favorable that the composition for a sealing member 10 does not substantially contain a processing aid. Specifically, it is more favorable that the amount of the processing aid is kept at not more than 0.1 parts by weight.

In addition, the composition for a sealing member 10 may contain various additives such as a crosslinking aid and a retarder as necessary.

### 3. Examples and Comparative Examples

Hereinafter, Examples and Comparative Examples of this embodiment will be described. However, the present invention is not limited to the configuration described below. Note that the same fluorine rubber component 11 is used in also any of Examples and Comparative Examples described below.

### 3.1 Examples 1-1 to 1-5, Comparative Examples 1-1 to 1-12

### 3.1.1 Sample according to Example 1-1

In Example 1-1, as the particulate resin 12 of the composition for a sealing member 10, one (lubricant 1) having the content of silicone of 70 weight% among Chaline (registered trademark) series manufactured by Nissin Chemical Industry Co., Ltd. was used. In Example 1-1, the content of the particulate resin 12 was set to 20 parts by weight on the basis of 100 parts by weight of the fluorine rubber component 11.

In Example 1-1, after kneading the composition for a sealing member 10 having the above-mentioned configuration, it was molded by the primary vulcanization at 170°C for 10 minutes into a spherical shape of 20 mm in outer diameter. Subsequently, secondary vulcanization was performed at 230°C for 4 hours on the spherical molded body. As a result, a sample of the sealing member 20 was obtained.

### 3.1.2 Samples according to Examples 1-2 to 1-5

In Examples 1-2 to 1-5, samples of the sealing member 20 were prepared using the composition for a sealing member 10 in which the configuration of the particulate resin 12 is different from that of the composition for a sealing member 10 used in Example 1-1. Conditions for preparing each sample of the sealing member 20 according to Examples 1-2 to 1-5 were the same as that in Example 1-1.

In Examples 1-2 to 1-5, the content of the particulate resin 12 (lubricant 1) is different from that of Example 1-1. Specifically, the content of the particulate resin 12 on the basis of 100 parts by weight of the fluorine rubber component 11 was 10 parts by weight in Example 1-2, 5 parts by weight in Example 1-3, 1 part by weight Example 1-4, and 0.5 parts by weight in Example 1-5.

### 3.1.3 Samples according to Comparative Examples 1-1 to 1-12

In Comparative Examples 1-1 to 1-12, samples of a sealing member were prepared using a composition for a sealing member having a configuration different from that of the composition for a sealing member 10 according to this embodiment. Conditions for preparing the samples of a sealing member according to Comparative Examples 1-1 to 1-12 were the same as that in Example 1-1.

In Comparative Examples 1-1 and 1-2, the content of the particulate resin 12 (lubricant 1) is less than that in this embodiment. Specifically, in Comparative Example 1-1, the content of the particulate resin 12 on the basis of 100 parts by weight of the fluorine rubber component 11 was 0.1 parts by weight. In Comparative Example 1-2, the content of the particulate resin 12 is 0 parts by weight, i.e., the particulate resin 12 is not used.

In Comparative Example 1-3, instead of the particulate resin 12 according to this embodiment, silicone oil (lubricant 2) was used. However, since the silicone oil has high lubricity with respect to the fluorine rubber component 11, it has been separated without being mixed with the fluorine rubber component 11. As a result, no sample of a sealing member was obtained in Comparative Example 1-3.

In Comparative Examples 1-4 to 1-12, samples of a sealing member were prepared using a composition for a sealing member containing a lubricant having a configuration different from that of the particulate resin 12 according to this embodiment. The configuration of the lubricant used in Comparative Examples 1-4 to 1-12 is different from that of the particulate resin 12 in that it does not include at least one of the compatible portion 12a and the lubrication portion 12b.

In Comparative Examples 1-4 to 1-6, respectively, lubricants 3 to 5, which were general lubricants, were used. In Comparative Examples 1-7 to 1-12, respectively, lubricants 6 to 11, which were general processing aids (such as mold release agents) having a lubricity function, were used. Specifically, the lubricants 3 to 11 used in Comparative Examples 1-4 to 1-12 are as follows.
Lubricant 3: Oleic acid amide ("Armoslip CP" manufactured by Lion Corporation.)
Lubricant 4: Teflon powder
Lubricant 5: Mixed lubricant mainly formed of fatty acid calcium salt ("Struktol WB16" manufactured by S&S Japan Co., LTD.)
Lubricant 6: Fatty acid zinc salt ("Exton L-2" manufactured by Kawaguchi Chemical Industry Co., LTD.)
Lubricant 7: Mixing agent of fatty acid metal salt and fatty acid glyceride ("Exton L-7" manufactured by Kawaguchi Chemical Industry Co., LTD.)
Lubricant 8: Aluminum stearate and calcium stearate
Lubricant 9: Paraffin-type special wax ("Suntight S" manufactured by Seiko Chemical Co.,Ltd.)
Lubricant 10: Methyl cellulose
Lubricant 11: Stearylamine ("FARMIN 80T" manufactured by Kao Corporation.)

### 3.1.4 Evaluation of Each Sample

A slidability test was conducted on the samples obtained in Examples 1-1 to 1-5 and Comparative Examples 1-1, 1-2, and 1-4 to 1-12. As a counterpart material to be slid, a plate material having a surface roughness Ra of 0.4 µm, on which hard chrome plating was performed, was used. The slidability test was conducted in a state where each sample was sandwiched with the counterpart material and compressed by 40%.

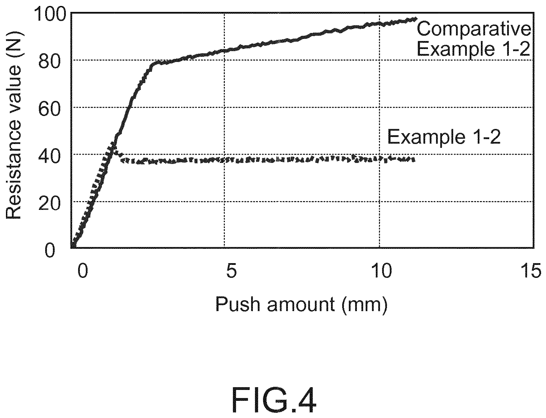

In the slidability test, a sample sandwiched with the counterpart material was placed on a testing machine (Autograph manufactured by Shimadzu Corporation.), and the resistance value (load) when the center part of the sample pushed in at a speed of 50 mm/min in the direction along the surface of the counterpart material was measured. As a result, for example, a graph as shown in Fig. 4 is obtained.

Fig. 4 is a graph showing an example of the result of the slidability test. In Fig. 4, the results obtained for the samples according to Example 1-2 and Comparative Example 1-2 are shown. It can be seen that in the example according to Example 1-2, the resistance value after starting sliding is lower than that of the sample according to Comparative Example 1-2.

The slidability of each sample was evaluated on the basis of the resistance value when the sample was pushed in by 10 mm. The evaluation criteria of slidability of each sample were A to D shown below.
A: Resistance value is not more than 40N.
B: Resistance value is not more than 50N.
C: Resistance value is not more than 70N.
D: Resistance value exceeds 70N.

Table 1 shows the evaluation results of the slidability of the samples according to Examples 1-1 to 1-4, Example 1-5 (comparative) and Comparative Examples 1-1, 1-2, and 1-4 to 1-12. Note that regarding Comparative Example 1-3 in which a sample of a sealing member was not obtained, the slidability was not evaluated. Further, Table 1 shows the content (parts by weight) of each component of each sample.

**[Table 1]**

| | Example 1-1 | Example 1-2 | Example 1-3 | Example 1-4 | Example 1-5 | Comparative 1-1 | Comparative Example 1-2 | Comparative Example 1-3 | Comparative Example 1-4 | Comparative 1-5 | Comparative Example 1-6 | Comparative 1-7 | Comparative Example 1-8 | Comparative Example 1-9 | Comparative Example 1-10 | Comparative Example 1-11 | Comparative 1-12 |
|---|---|---|---|---|---|---|---|---|---|---|---|---|---|---|---|---|---|
| Fluorine rubber component | 100 | 100 | 100 | 100 | 100 | 100 | 100 | 100 | 100 | 100 | 100 | 100 | 100 | 100 | 100 | 100 | 100 |
| Carbon | 70 | 70 | 70 | 70 | 70 | 70 | 70 | 70 | 70 | 70 | 70 | 70 | 70 | 70 | 70 | 70 | 70 |
| Lubricant 1 | 20 | 10 | 5 | 1 | 0.5 | 0.1 | | | | | | | | | | | |
| Lubricant 2 | | | | | | | | 10 | | | | | | | | | |
| Lubricant 3 | | | | | | | | | 10 | | | | | | | | |
| Lubricant 4 | | | | | | | | | | 10 | | | | | | | |
| Lubricant 5 | | | | | | | | | | | 10 | | | | | | |
| Lubricant 6 | | | | | | | | | | | | 10 | | | | | |
| Lubricant 7 | | | | | | | | | | | | | 10 | | | | |
| Lubricant 8 | | | | | | | | | | | | | | 10 | | | |
| Lubricant 9 | | | | | | | | | | | | | | | 10 | | |
| Lubricant 10 | | | | | | | | | | | | | | | | 10 | |
| Lubricant 11 | | | | | | | | | | | | | | | | | 10 |
| Slidability | A | A | A | B | C | D | D | - | D | D | D | D | D | D | D | D | D |

As shown in Table 1, in any of the samples according to Examples1-1 to 1-5 in which the content of the particulate resin 12 on the basis of 100 parts by weight of the fluorine rubber component 11 was not less than 0.5 parts by weight, the resistance value was not less than 70 N and favorable slidability was achieved. Therefore, it was confirmed that the sealing member 20 according to this embodiment, favorable slidability was achieved.

Further, in Examples 1-1 to 1-4 in which the content of the particulate resin 12 was not less than 1 part by weight on the basis of 100 parts by weight of the fluorine rubber component 11, the resistance value was not more than 50 N and more favorable slidability was achieved. Therefore, it is favorable that the content of the particulate resin 12 in the composition for a sealing member 10 is not less than 1 part by weight.

Further, in Examples 1-1 to 1-3 in which the content of the particulate resin 12 was not less than 5 parts by weight on the basis of 100 parts by weight of the fluorine rubber component 11, the resistance value was not more than 40 N and particularly favorable slidability was achieved. Therefore, it is particularly favorable that the content of the particulate resin 12 in the composition for a sealing member 10 is not less than 5 parts by weight.

Meanwhile, in any of the samples according to Comparative Examples1-1, 1-2, and 1-4 to 1-12 in which the configuration is different from that in this embodiment, the resistance value exceeds 70 N and favorable slidability was not achieved. Therefore, it was confirmed that in the sealing member 20 according to this embodiment, slidability higher than that of any of the sealing members according to Comparative Examples could be achieved.

### 3.2 Examples 2-1 to 2-9

In Examples 2-1 to 2-9, samples of the sealing member 20 were prepared by molding the composition for a sealing member 10 having a different content of carbon under the same conditions as those in Examples 1-1. Then, the slidability of each sample was evaluated similarly to Examples 1-1 to 1-5 and Comparative Examples 1-1, 1-2, and 1-4 to 1-12 described above.

Table 2 shows the evaluation results of the samples according to Examples 2-1 to 2-9. Further, Table 2 shows the contents (parts by weight) of carbon and the lubricant 1 of each sample. Note that in Example 2-1, the content of carbon is 0 part by weight, i.e., carbon is not used.

**[Table 2]**

| | Example 2-1 | Example 2-2 | Example 2-3 | Example 2-4 | Example 2-5 | Example 2-6 | **Example** 2-7 | Example 2-8 | Example 2-9 |
|---|---|---|---|---|---|---|---|---|---|
| Fluorine rubber component | 100 | 100 | 100 | 100 | 100 | 100 | 100 | 100 | 100 |
| Carbon | 0 | 10 | 20 | 30 | 40 | 50 | 60 | 70 | 80 |
| Lubricant 1 | 10 | 10 | 10 | 10 | 10 | 10 | 10 | 10 | 10 |
| Slidability | B | B | B | B | A | A | A | A | A |

As shown in Table 2, in any of the samples according to Examples2-1 to 2-9, the resistance value was not more than 50 N and favorable slidability was achieved. Further, in Examples 2-5 to 2-9 in which the content of carbon was not less than 40 parts by weight, the resistance value was not more than 40 N and particularly favorable slidability was achieved.

### 4. Configuration Example of Sealing Member 20

### 4.1 Overview

As an example of the sealing member 20 according to this embodiment, an example in which the sealing member 20 includes a seal ling having high hardness will be described. Specifically, in the sealing member 20 according to this configuration example, the Shore A hardness measured using the surface, which serves as the sliding surface, of the surface layer portion 23 as the pressing surface is not less than 80.

That is, the composition such as the amount of carbon in the composition for a sealing member 10 is determined so that the Shore A hardness of the sealing member 20 is not less than 80. By molding such a composition for a sealing member 10 in a ring shape, the sealing member 20 having high hardness is obtained.

The sealing member 20 having high hardness can be suitably used as, for example, an oil seal for a hydraulic device. That is, in the hydraulic device, it is effective to use the sealing member 20 having high hardness in order to suppress a decrease in sealing property due to deformation or damage by high hydraulic pressure. Further, the sealing member 20 is particularly suitable for sealing between members that reciprocate.

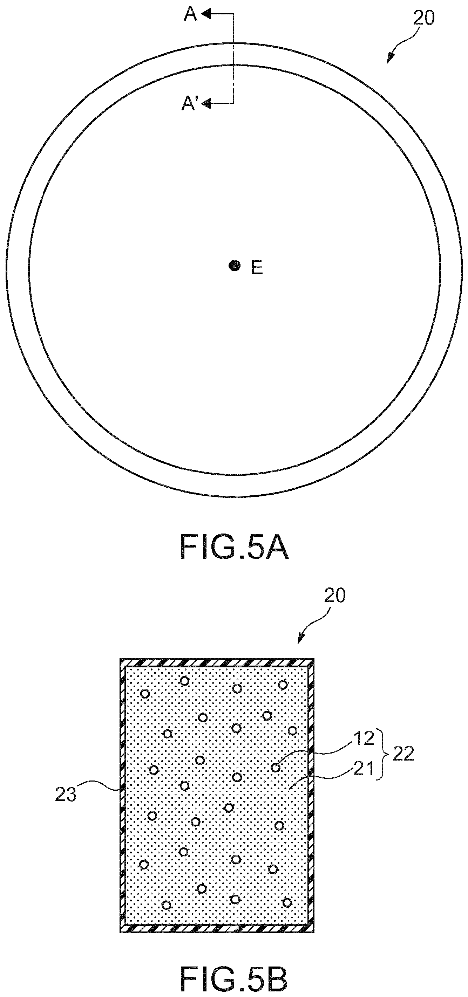

Examples of the hydraulic device capable of effectively using the sealing member 20 having high hardness include a continuously variable transmission (CVT) including a pulley, which includes a shaft that reciprocates and housing. Hereinafter, an example in which the sealing member 20 having high hardness is used in a continuously variable transmission will be described with reference to Figs. 5A to 7.

### 4.2 Sealing Member 20 for Continuously Variable Transmission

Fig. 5A is a plan view of the sealing member 20 used in a continuously variable transmission. Fig. 5B is a cross-sectional view of the sealing member 20 taken along the line A-A' in Fig. 5A. The sealing member 20 is formed in a ring shape centered on a central axis E. Further, the sealing member 20 includes the body portion 22 and the surface layer portion 23 that covers the body portion 22.

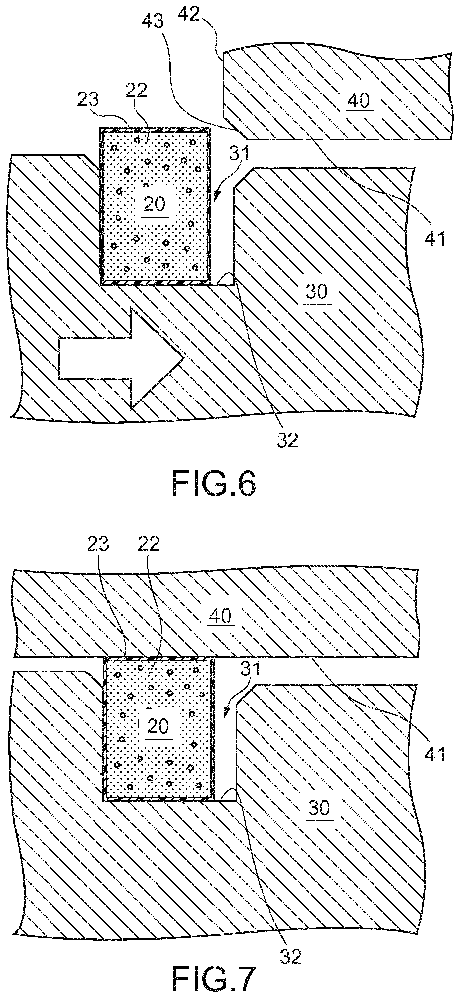

Fig. 6 is a cross-sectional view showing an operation of incorporating the sealing member 20 into a shaft 30 and a housing 40. The shaft 30 includes a groove portion 31 provided over the entire circumference thereof. Further, in the housing 40, an insertion hole in which the shaft 30 is inserted is provided.

The inner diameter of the sealing member 20 is slightly smaller than the diameter of a bottom surface 32 of the groove portion 31 of the shaft 30. For this reason, the sealing member 20 is fitted in the groove portion 31 of the shaft 30 while being slightly expanded in the radial direction. As a result, the inner peripheral surface of the sealing member 20 is in close contact with the bottom surface 32 of the groove portion 31 of the shaft 30.

Then, the shaft 30 in which the sealing member 20 is mounted in the groove portion 31 is inserted into the housing 40 from the side of an end surface 42. The outer diameter of the sealing member 20 mounted in the groove portion 31 of the shaft 30 is slightly larger than the inner diameter of the housing 40. For this reason, it is necessary to compress and deform the sealing member 20 in the radial direction.

The housing 40 includes a chamfered portion 43 that connects the end surface 42 and an inner peripheral surface 41 to each other. For this reason, when the shaft 30 is inserted into the housing 40 from the side of the end surface 42, the sealing member 20 eventually reaches the end surface 42 of the housing 40, and the sealing member 20 is brought into contact with the chamfered portion 43 of the housing 40.

In this state, a pressing force is further applied to the shaft 30 to push the shaft 30 into the housing 40 as it is. As a result, the sealing member 20 enters the housing 40 while being compressed and deformed in the radial direction by receiving a radially inward pressing force from the chamfered portion 43 of the housing 40.

Then, the sealing member 20 reaches the inner peripheral surface 41 of the housing 40, and the shaft 30 is further pushed to a predetermined position, thereby finishing the insertion of the shaft 30 into the housing 40. As described above, it is possible to smoothly insert the shaft 30 into the housing 40 only by the operation of pushing the shaft 30 to the housing 40.

In this embodiment, since the sealing member 20 is covered with the surface layer portion 23, the sliding resistance between the sealing member 20 and the housing 40 when the shaft 30 is inserted into the housing 40 is reduced. This makes it easy to insert the shaft 30 into the housing 40.

Specifically, in the sealing member 20, the sliding resistance when passing through the chamfered portion 43 of the housing 40 is reduced by not less than 30% as compared with the sealing member formed of only the fluorine rubber 21. Further, in the sealing member 20, also the sliding resistance when sliding along the inner peripheral surface 41 of the housing 40 is reduced by not less than 30%.

Fig. 7 is a cross-sectional view showing the state where the sealing member 20 is incorporated into the shaft 30 and the housing 40. The sealing member 20 shown in Fig. 7 is compressed and deformed in the radial direction by being sandwiched between the shaft 30 and the housing 40. Therefore, an elastic force of trying to expand in the radial direction is generated in the sealing member 20.

For this reason, the sealing member 20 presses the inner peripheral surface to the bottom surface 32 of the groove portion 31 of the shaft 30 by the elastic force of trying to expand in the radial direction, and presses the outer peripheral surface to the inner peripheral surface 41 of the housing 40. As a result, the sealing member 20 is capable of sealing between the shaft 30 and the housing 40.

When the shaft 30 reciprocates in relation to the housing 40, the outer peripheral surface of the sealing member 20 slides in relation to the inner peripheral surface 41 of the housing 40 while keeping contact therewith. Thus, the sealing property between the shaft 30 and the housing 40 is maintained. In the sealing member 20, the body portion 22 has rubber elasticity, a high sealing property can be achieved.

Further, in the sealing member 20, the outer peripheral surface, which is a sliding surface that is in contact with the housing 40, includes the surface layer portion 23. For this reason, the sliding resistance between the outer peripheral surface of the sealing member 20 and the inner peripheral surface 41 of the housing 40 is reduced. As a result, the drive loss when the shaft 30 reciprocates in relation to the housing 40 is reduced.

Note that in the sealing member 20, it is favorable that a parting line that can be formed at the time of molding is not present on the outer peripheral surface, which is a sliding surface. As a result, the sliding resistance between the outer peripheral surface of the sealing member 20 and the inner peripheral surface 41 of the housing 40 is further reduced. Note that the sliding surface of the sealing member 20 is not limited to the outer peripheral surface, and may be the inner peripheral surface or side surface.

### 4.3 Example

### 4.3.1 Preparation of Sample

A sample A of the sealing member 20 according to Example and a sample B of a sealing member according to Comparative Example, which was formed of only the fluorine rubber 21 in a shape similar to that of the sample A, was prepared.

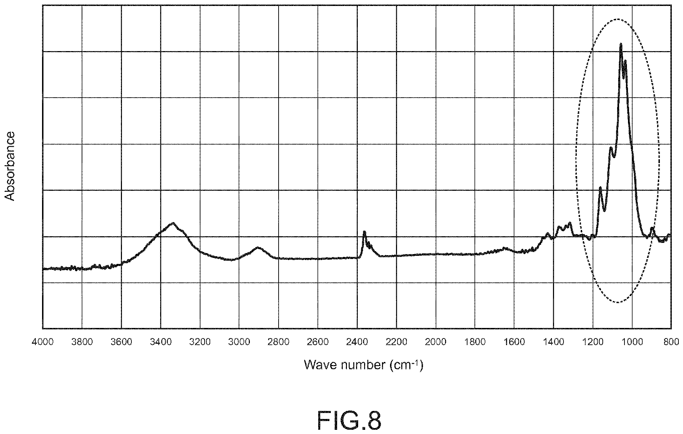

Fig. 8 shows an infrared spectrum obtained as a result of infrared absorption analysis of the surface of the sample A. In the infrared spectrum shown in Fig. 8, a peak of absorbance of silicone is observed in a region surrounded by broken lines with a wave number of approximately 1100 cm⁻¹. In accordance therewith, it has been confirmed that the particulate resin 12 is present on the surface of the sample A.

### 4.3.2 Slidability Evaluation

Slidability evaluation was performed on the samples A and B. For the slidability evaluation, the housing 40 having the inner diameter of 161 mm and the shaft 30 corresponding thereto were used. That is, in this slidability evaluation, the housing 40 is used as a counterpart material and the outer peripheral surface of each of the samples A and B is caused to slide along the inner peripheral surface 41 of the housing 40.

In the slidability evaluation, the resistance value (load) when the shaft 30 in which each sample is mounted is caused to slide in relation to the housing 40 in oil was measured. The temperature of the oil was 80°C. Further, the hydraulic pressure of the oil was changed in the range of 1 to 6 MPa, and the resistance values at 1 MPa, 3 MPa, and 6 MPa were measured.

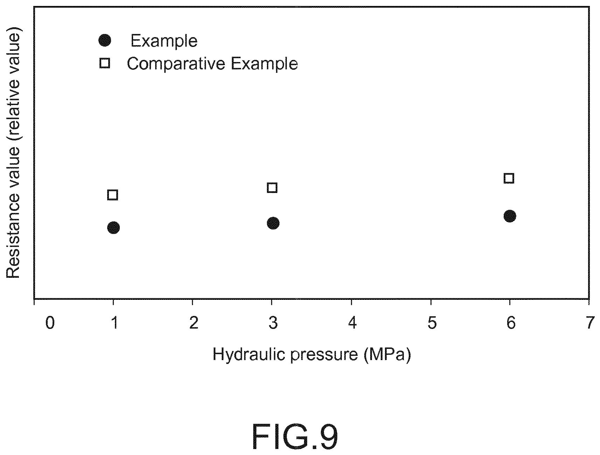

Fig. 9 is a graph showing the measurement results of the resistance value. In Fig. 9, the horizontal axis indicates the hydraulic pressure (MPa) and the vertical axis indicates the relative value of the resistance value. As shown in Fig. 9, at any hydraulic pressure, the resistance value of the sample of the sealing member 20 according to Example is lower by not less than 30% than that of the sample of the sealing member according to Comparative Example.

As a result, it was confirmed that in the sealing member 20, the sliding resistance could be significantly reduced by the action of the surface layer portion 23. Further, in the sealing member 20, it was confirmed that the effect of reducing the sliding resistance even in the high hydraulic pressure was maintained. This is considered to be due to the Shore A hardness of the sealing member 20 being not less than 80.

### 4.3.3 Examination of Surface Roughness Rz

Regarding the surface roughness Rz of the counterpart material and the surface roughness Rz of the sliding surface of the sealing member 20, the conditions under which particularly excellent slidability and sealing property could be obtained were examined. In this embodiment, the surface roughness Rz is defined in accordance with the JIS standard (JIS B 6001-1982).

### (1) Surface Roughness Rz of Counterpart Material

As the counterpart material, the housing 40 in which the surface roughness Rz of the inner peripheral surface 41 differs was prepared. Specifically, the surface roughness Rz of the counterpart material was 0.1 z, 0.5 z, 3.0 z, 6.0 z, 8.0 z, 13.0 z, 18.0 z, and 24.0 z. The surface roughness Rz of the outer peripheral surface, which is a sliding surface of the sealing member 20, was 6.0 z.

The slidability evaluation of the sealing member 20 with respect to each counterpart material was performed. In the slidability evaluation, the resistance value was measured similarly to the above. As a result, in the case of the counterpart material having the surface roughness Rz of not less than 0.5 z, a particularly low resistance value was obtained. As described above, it can be seen that in the sealing member 20, excellent slidability can be achieved even if the surface roughness Rz of the counterpart material is large.

Meanwhile, in the case of the counterpart material having the surface roughness Rz of 0.1 z, the resistance value was slightly higher. This is considered because the surface of the counterpart material is too smooth, making it difficult to form an oil film between the surface of the counterpart material and the sliding surface of the sealing member 20. From this viewpoint, it is favorable that the surface roughness Rz of the counterpart material is not less than 0.5 z.

Further, the sealing property between each counterpart material and the sealing member 20 was evaluated. As a result, in the range from 0.1 z to 13.0 z of the surface roughness Rz of the counterpart material, a particularly high sealing property was achieved. As described above, it can be seen that in the sealing member 20, even in a range in which the surface roughness Rz of the counterpart material is high, an excellent sealing property can be achieved.

Meanwhile, in the case of the counterpart material having the surface roughness Rz of 18.0 z, the sealing property was slightly lower. In the case of the counterpart material having the surface roughness Rz of 24.0 z, the sealing property was further lowered. From this viewpoint, the surface roughness Rz of the counterpart material is favorably not more than 18.0 z, and more favorably not more than 13.0 z.

Further, as described above, in the sealing member 20, even in the case where the surface roughness Rz of the counterpart material is large, excellent slidability and sealing property can be easily achieved. Therefore, using the sealing member 20 eliminates the necessity for processing such as mirror polishing for smoothing the counterpart material. As a result, it is possible to reduce the production cost of the counterpart material.

### (2) Surface Roughness Rz of Sliding Surface of Sealing Member 20

The sealing member 20 in which the surface roughness Rz of the sliding surface differs was prepared. Specifically, the surface roughness Rz of the sliding surface of the sealing member 20 was 0.1 z, 0.5 z, 1.0 z, 3.0 z, 6.0 z, 8.0 z, 10.0 z, and 15.0 z. The surface roughness Rz of the counterpart material was 6.0 z.

The slidability evaluation of each sealing member 20 with respect to the counterpart material was performed. In the slidability evaluation, the resistance value was measured similarly to the above. As a result, in the case of the sealing member 20 in which the surface roughness Rz of the sliding surface is not less than 0.5 z, a particularly low resistance value was obtained. As described above, it can be seen that in the sealing member 20, excellent slidability can be achieved even if the surface roughness Rz of the sliding surface is large.

Meanwhile, in the case of the sealing member 20 in which the surface roughness Rz of the sliding surface is 0.1 z, the resistance value was slightly higher. This is considered because the sliding surface of the sealing member 20 is too smooth, making it difficult to form an oil film between the sliding surface of the sealing member 20 and counterpart material. From this viewpoint, it is favorable that the surface roughness Rz of the sliding surface of the sealing member 20 is not less than 0.5 z.

Further, the sealing property between the counterpart material and each sealing member 20 was evaluated. As a result, in the range from 0.1 z to 8.0 z of the surface roughness Rz of the sliding surface of the sealing member 20, a particularly high sealing property was achieved. As described above, it can be seen that in the sealing member 20, even in a range in which the surface roughness Rz of the sliding surface is high, an excellent sealing property can be achieved.

Meanwhile, in the case of the sealing member 20 in which the surface roughness Rz of the sliding surface is10.0 z, the sealing property was slightly lower. In the case of the sealing member 20 in which the surface roughness Rz of the sliding surface is 15.0 z, the sealing property was further lowered. From this viewpoint, the surface roughness Rz of the sliding surface of the sealing member 20 is favorably not more than 10.0 z, and more favorably not more than 8.0 z.

Further, as described above, in the sealing member 20, even in the case where the surface roughness Rz of the sliding surface is large, excellent slidability and sealing property can be easily achieved. Therefore, using the sealing member 20 eliminates the necessity for processing such as mirror polishing for smoothing the sliding surface. As a result, it is possible to reduce the production cost of the sealing member 20.

### 4.4 Other Applications of Sealing Member 20 Having High Hardness

The sealing member 20 is very useful for applications that require high hardness in addition to the hydraulic device.

For example, the sealing member 20 is effective not only as an oil seal but also as a gas seal. For this reason, the sealing member 20 can be suitably used as a seal of the rotation shaft of a compressor, a seal of a gas valve, a seal of a gas regulator, or the like.

Further, the sealing member 20 is also effective as a seal of fuel such as gasoline. For this reason, the sealing member 20 can be suitably used in, for example, a fuel injection pump.

Further, the sealing member 20 can be suitably used as a dust seal or a drip-proof seal in an apparatus such as an industrial robot.

### Reference Signs List

- 10: composition for a sealing member
- 11: fluorine rubber component
- 12: particulate resin
- 12a: compatible portion
- 12b: lubrication portion
- 20: sealing member
- 21: fluorine rubber
- 22: body portion
- 23: surface layer portion
- 30: shaft
- 31: groove portion
- 40: housing
- M: mold

## Claims

1. A sealing member that is formed in a ring shape and has a sliding surface, the sealing member comprising:
100 parts by weight of fluorine rubber; and
1 part by weight to 20 parts by weight of a particulate resin, the particulate resin being formed of a silicone-acrylic copolymer which comprises an acrylic component and a silicone component,
the acrylic component having compatibility with the fluorine rubber, and the silicone component having lubricity with respect to the fluorine rubber,
wherein the particulate resin is present on the sliding surface,
wherein the particulate resin is dispersed in the fluorine rubber, and
wherein a Shore A hardness measured using the sliding surface as a pressing surface is not less than 80.

2. The sealing member according to claim 1, wherein
the particulate resin contains not less than 40 weight% of silicone.

3. The sealing member according to any one of claims 1 or 2, further comprising
carbon distributed in the fluorine rubber.

4. The sealing member according to any one of claims 1 to 3, wherein
the sealing member is configured to slide on a counterpart material having a surface roughness Rz of not less than 0.5 z and not more than 18.0 z in accordance with JIS B 6001-1982.

5. The sealing member according to any one of claims 1 to 4, wherein
the sliding surface includes no parting line.

## Patentansprüche

1. Dichtungselement, das ringförmig ausgebildet ist und eine Gleitfläche aufweist, wobei das Dichtungselement umfasst:
100 Gewichtsteile Fluorkautschuk; und
1 bis 20 Gewichtsteile eines teilchenförmigen Harzes, wobei das teilchenförmige Harz aus einem Silikon-Acryl-Copolymer gebildet ist, das eine Acrylkomponente und eine Silikonkomponente umfasst,
wobei die Acrylkomponente mit dem Fluorkautschuk kompatibel ist und die Silikonkomponente gegenüber dem Fluorkautschuk schmierfähig ist,
wobei das teilchenförmige Harz auf der Gleitfläche vorhanden ist,
wobei das teilchenförmige Harz in dem Fluorkautschuk dispergiert ist, und
wobei eine Shore-A-Härte, gemessen unter Verwendung der Gleitfläche als Druckfläche, nicht weniger als 80 beträgt.

2. Dichtungselement nach Anspruch 1, wobei
das teilchenförmige Harz nicht weniger als 40 Gew.-% Silikon enthält.

3. Dichtungselement nach einem der Ansprüche 1 oder 2, ferner umfassend
Kohlenstoff, der in dem Fluorkautschuk verteilt ist.

4. Dichtungselement nach einem der Ansprüche 1 bis 3, wobei
das Dichtungselement so konfiguriert ist, dass es auf einem Gegenstückmaterial mit einer Oberflächenrauheit Rz von nicht weniger als 0,5 z und nicht mehr als 18,0 z gemäß JIS B 6001-1982 gleitet.

5. Dichtungselement gemäß einem der Ansprüche 1 bis 4, wobei
die Gleitfläche keine Trennlinie aufweist.

## Revendications

1. Élément d'étanchéité formé en anneau et comportant une surface de glissement, l'élément d'étanchéité comprenant :
100 parties en poids de caoutchouc fluoré ; et
1 partie en poids à 20 parties en poids d'une résine particulaire, la résine particulaire étant formée d'un copolymère silicone-acrylique qui comprend un composant acrylique et un composant silicone,
le composant acrylique étant compatible avec le caoutchouc fluoré, et le composant silicone ayant un pouvoir lubrifiant par rapport au caoutchouc fluoré,
dans lequel la résine particulaire est présente sur la surface de glissement,
dans lequel la résine particulaire est dispersée dans le caoutchouc fluoré, et
dans lequel une dureté Shore A mesurée en utilisant la surface de glissement comme surface de pression n'est pas inférieure à 80.

2. L'élément d'étanchéité selon la revendication 1, dans lequel
la résine particulaire contient au moins 40 % en poids de silicone.

3. L'élément d'étanchéité selon l'une quelconque des revendications 1 ou 2, comprenant en outre du carbone réparti dans le caoutchouc fluoré.

4. L'élément d'étanchéité selon l'une quelconque des revendications 1 à 3, dans lequel
l'élément d'étanchéité est configuré pour glisser sur un matériau homologue ayant une rugosité de surface Rz d'au moins 0,5 z et d'au plus 18,0 z conformément à la norme JIS B 6001-1982.

5. L'élément d'étanchéité selon l'une quelconque des revendications 1 à 4, dans lequel
la surface de glissement ne comprend aucune ligne de séparation.
